# EUROPÄISCHE PATENTSCHRIFT

(11) **EP 3 431 880 B1**
(45) Veröffentlichungstag und Bekanntmachung des Hinweises auf die Patenterteilung: **04.08.2021**
(21) Anmeldenummer: 18180786.8
(22) Anmeldetag: 29.06.2018
(51) Int. Cl.: F23R 3/34, F23R 3/28

(54) **DÜSENBAUGRUPPE FÜR EINE BRENNKAMMER EINES TRIEBWERKS**
NOZZLE ASSEMBLY FOR A COMBUSTION CHAMBER OF AN ENGINE
MODULE BUSE POUR UNE CHAMBRE DE COMBUSTION D'UN PROPULSEUR

(30) Priorität: 21.07.2017 DE 102017212616
(43) Veröffentlichungstag der Anmeldung: 23.01.2019
(73) Patentinhaber: Rolls-Royce Deutschland Ltd & Co KG, 15827 Blankenfelde-Mahlow (DE)
(72) Erfinder: Clemen, Carsten, 15827 Blankenfelde-Mahlow (DE); Dörr, Thomas, 15827 Blankenfelde-Mahlow (DE)

(56) Entgegenhaltungen:
- WO-A1-2017/123619
- US-A1- 2011 162 370
- US-A1- 2015 159 874
- US-A1- 2015 219 337
- US-A1- 2016 032 842

## Beschreibung

Die Erfindung betrifft eine Düsenbaugruppe für eine Brennkammer eines Triebwerks, insbesondere für eine Ringbrennkammer einer Gasturbinentriebwerks. Düsenbaugruppen für Brennkammern eines Triebwerks umfassen mehrere nebeneinander, üblicherweise entlang einer Kreislinie angeordnete Düsen zur Einbringung von Treibstoff in die Brennkammer. Die Düsen dienen ferner auch zum Verdrallen der zugeführten Luft, die dann, mit dem zugeführten Treibstoff gemischt, an einer Düsenaustrittsöffnung der Düse in die Brennkammer gefördert wird. Neben der Düsenaustrittsöffnung weist jede Düse insbesondere einen Treibstoffkanal zur Förderung von Treibstoff in Richtung der Düsenaustrittsöffnung auf. Dieser Treibstoffkanal ist mit einer Treibstoffzuführung, zum Beispiel in Form eines Treibstoffmanifolds, außerhalb eines Brennkammergehäuses verbunden. Der Treibstoffkanal verläuft innerhalb der Düse in Richtung der Düsenaustrittsöffnung. Der Treibstoffkanal weist einen Querschnitt auf, der vorgibt, welche Menge an Treibstoff maximal in Richtung der Düsenaustrittsöffnung gefördert werden kann. Der Querschnitt des Treibstoffkanals gibt somit die über die jeweilige Düse in den Brennraum einzubringende Menge Treibstoff vor. Eine solche Düsenbaugruppe ist beispielsweise aus der US 2011/0162370 A1 und der US 2015/0159874 A1 bekannt.

Es ist auch bekannt, einen Treibstoffkanal einer jeden Düse mit unterschiedlichen Querschnitten auszubilden. So wird beispielsweise, bezogen auf eine Strömungsrichtung des Treibstoffs in Richtung der Düsenaustrittsöffnung, stromauf eines Treibstoffkanals ein Abschnitt mit einem Querschnitt vorgesehen, der kleiner ist als in einem sich daran in Strömungsrichtung anschließendem Abschnitt des Treibstoffkanals. Über den Abschnitt kleineren Querschnitts wird dabei vorgeben, welche Treibstoffmenge über den sich stromab anschließenden Abschnitt größeren Querschnitts zu der Düsenaustrittsöffnung der Düse gelangt. Wie auch in der US 2015/0159874 A1 sind in der Praxis die einzelnen Düsen einer Düsenbaugruppe für eine Brennkammer eines Triebwerks zueinander identisch ausgebildet, insbesondere mit identischen Treibstoffkanälen. Es handelt sich mithin um identische Bauteile mit identischen Teilenummern, die dann für die Montage einer Düsenbaugruppe mit typischerweise 12, 14, 16, 18, 20 oder 22 Düsen verwendet werden.

Beim Betrieb eines Triebwerks kann es beispielsweise insbesondere beim Starten vorkommen, dass das Triebwerk in einem Bereich betrieben wird, in dem ein Luft-Treibstoff-Verhältnis von 0 bis 20 durchfahren wird. In einem solchen Betriebsbereich können erhebliche Rußemissionen entstehen. Auch neigen Düsen bisher bekannter Düsenbaugruppen in einem Niederlastbetriebsbereich des Triebwerks zu unerwünschten thermoakustischen Schwingungen.

Der Erfindung liegt vor diesem Hintergrund die Aufgabe zugrunde, eine verbesserte Düsenbaugruppe bereitzustellen, die vorgenannte Nachteile vermeidet oder zumindest reduziert.

Diese Aufgabe wird mit einer Düsenbaugruppe nach Anspruch 1 gelöst.

Erfindungsgemäß ist dabei vorgeschlagen, dass mindestens zwei unterschiedliche Typen von Düsen vorgesehen sind, wobei
- die Düsen unterschiedlicher Typen zwar Düsenaustrittsöffnungen mit identischem Querschnitt aufweisen, jedoch
- zur Vorgabe unterschiedlicher Durchflussmengen an Treibstoff durch die Treibstoffkanäle der unterschiedlichen Typen von Düsen ein Querschnitt eines Treibstoffkanals eines Typs von Düse zu einem Querschnitt eines Treibstoffkanals eines anderen Typs von Düse verschieden ist.

Über die unterschiedlichen Querschnitte bei den unterschiedlichen Typen von Düsen wird somit je nach Typ von Düse eine unterschiedliche Durchflussmenge an Treibstoff durch den jeweiligen Treibstoffkanal und damit in Richtung der Düsenaustrittsöffnung vorgegeben. Bei größerem Querschnitt steigt die Menge des Treibstoffs, der durch den Treibstoffkanal zur Düsenaustrittsöffnung gefördert werden kann respektive hierüber eingestellt ist. Unter dem Querschnitt eines Treibstoffkanals einer Düse wird hierbei üblicherweise der kleinste, die Durchflussmenge an Treibstoff in Richtung der Düsenaustrittsöffnung bestimmende Querschnitt des Treibstoffkanals verstanden. Hiervon unberührt ist die Möglichkeit, dass der Treibstoffkanal entlang seiner Erstreckungsrichtung in Richtung der Düsenaustrittsöffnung Abschnitte unterschiedlichen Querschnitts aufweist. Letztlich bestimmt jedoch der kleinste Querschnitt die Treibstoffmenge, die über den Treibstoffkanal zur Düsenaustrittsöffnung gelangt. Bei der erfindungsgemäßen Lösung sind nun mindestens zwei unterschiedliche Typen von Düsen vorgesehen, sodass über die jeweiligen unterschiedlichen Treibstoffkanäle an den identischen Düsenaustrittsöffnungen unterschiedliche Mengen an Treibstoff in die Brennkammer gelangen. Derart kann erreicht werden, dass eine Düse mit größerem Querschnitt letztlich fetter (gleichwohl immer noch mit Luftüberschuss und damit mager), d.h. mit größerer Menge Treibstoff, betrieben wird als eine Düse eines anderen Typs mit einem Treibstoffkanal kleineren Querschnitts. Derart können die Düsen der Düsenbaugruppe mit unterschiedlichen Luft-Treibstoff-Verhältnis betrieben werden, insbesondere derart, dass zwar das Verhältnis von über alle Düsen in die Brennkammer geförderter Luft zu dem über alle Düsen in den Brennraum geführten Treibstoff, mithin das Gesamtluft-zu-Gesamttreibstoffmenge-Verhältnis in der Brennkammer konstant bleibt, gleichwohl die Düsen der unterschiedlichen Typen mit unterschiedlichen Luft-Treibstoff-Verhältnissen betrieben werden. Derart können die unterschiedlichen Typen von Düsen jeweils in Bereichen reduzierter Rußemission betrieben werden, ohne dass in Summe hierdurch Auswirkungen auf das Gesamtluft-zu-Gesamttreibstoffmenge-Verhältnis in der Brennkammer und damit für den Schub des Triebwerks auftreten.

Die Querschnitte der Treibstoffkanäle unterschiedlicher Typen von Düsen sind hierbei in einer Ausführungsvariante invariabel und damit unveränderlich. Jeder Treibstoffkanal gibt damit durch einen jeweiligen minimalen Querschnitt die Menge des zur Düsenaustrittsöffnung zu fördernden Treibstoffs mit einem (innerhalb des jeweiligen Treibstoffkanals) unveränderlichem Maß vor. Die Menge des zu fördernden Treibstoffs zu einer Düsenaustrittsöffnung innerhalb der Düse ist somit jeweils innerhalb der Düse durch den kleinsten Querschnitt des stromauf der Düsenaustrittsöffnung vorgesehenen Treibstoffkanals voreingestellt.

In einer Ausführungsvariante umfasst ein Treibstoffkanal wenigstens eines Typs von Düse mindestens zwei Abschnitte mit unterschiedlichen Querschnitten. Der kleinste Querschnitt eines Treibstoffkanals dieses Typs von Düse ist zu dem kleinsten Querschnitt eines Treibstoffkanals eines anderen Typs von Düse verschieden. Mithin können die Düsen unterschiedlichen (ersten und zweiten) Typs somit auch Abschnitte umfassen, die einen Querschnitt aufweisen, der bei einem ersten Typ von Düse zu dem Querschnitt eines Abschnitts eines anderen Typs von Düse identisch ist. Für die Vorgabe unterschiedlicher Durchflussmengen über den Treibstoffkanal ist dann aber weiterhin vorgesehen, dass sich die hierfür maßgeblichen (kleinsten) Querschnitte der Treibstoffkanäle der Düsen unterschiedlicher Typen voneinander unterscheiden.

Bezogen auf einen Referenzquerschnitt kann beispielsweise ein Querschnitt eines Treibstoffkanals des einen (ersten) Typs von Düse um mindestens 3% kleiner sein als der Referenzquerschnitt. Ein Querschnitt eines Treibstoffkanals des anderen (zweite) Typs von Düse kann ferner um mindestens 7% größer sein als ein Querschnitt des - in dieser Hinsicht zumindest lokal engeren - Treibstoffkanals des einen (ersten) Typs. Die (kleinsten oder mittleren) Querschnitte der Treibstoffkanäle der Düsen unterschiedlicher Typen unterscheiden sich somit messbar, sodass im Betrieb des Triebwerks an den Düsen unterschiedlicher Typen unterschiedliche Treibstoffmengen und mithin Luft-Treibstoff-Gemische unterschiedlicher Verhältnisse eingespritzt werden.

Insbesondere mit Blick auf eine Reduktion von Rußemissionen und die Erhaltung eines konstanten Schubs kann es vorteilhaft sein, die Unterschiede in den Querschnitten zu begrenzen. So ist in einer Ausführungsvariante beispielsweise vorgesehen, dass ein Querschnitt eines Treibstoffkanals des einen (ersten) Typs von Düse um maximal 5% kleiner ist als ein vorgegebener Referenzquerschnitt, während ein Querschnitt eines Treibstoffkanals des anderen (zweiten) Typs von Düse um maximal 10% größer ist als der Querschnitt des einen (ersten) Typs von Düse.

Ein Referenzquerschnitt kann hierbei beispielsweise im Bereich von 0,75 mm² bis 20 mm² liegen, insbesondere im Bereich von 2,5 mm² bis 3,9 mm². So variieren die minimalen Querschnitte eines Treibstoffkanals einer Düse, die die zuzuführende Treibstoffmenge limitieren, z.B. je nach Triebwerk. Beispielsweise weisen bei aus dem Stand der Technik bekannten Düsenbaugruppen mit identisch ausgebildeten Düsen die Treibstoffkanäle durchweg einen einheitlichen minimalen Querschnitt im Bereich von 2 mm auf. In einer Ausführungsvariante ist nun eine Düsenbaugruppe vorgeschlagen, bei der ein (kleinster oder mittlerer) Querschnitt des einen Typs von Düse einen mittleren Durchmesser im Bereich von 1,85 mm bis 1,95 mm aufweist, während ein (kleinster oder mittlerer) Querschnitt des anderen Typs von Düse einen mittleren Durchmesser im Bereich von 2,05 mm bis 2,15 mm aufweist. Die vorstehend erläuterten prozentualen Bezüge aufgreifend, könnte somit beispielsweise der Durchmesser eines Referenzquerschnitts bei etwa 2 mm liegen. Ein Querschnitt eines Treibstoffkanals des einen (ersten) Typs von Düse mit etwa 1,9 mm wäre dann auch um nicht mehr als 5% kleiner als der Referenzquerschnitt von 2 mm. Analog weist dann beispielsweise ein größerer Querschnitt eines Treibstoffkanal des anderen (zweiten) Typs von Düse einen Durchmesser von etwa 2,1 mm auf und ist damit weniger als 10% größer als der Querschnitt des einen (ersten) Typs von Düse.

In einer Ausführungsvariante sind mindestens drei unterschiedliche Typen von Düsen vorgesehen, die jeweils hinsichtlich des (kleinsten) Querschnitts eines jeweiligen Treibstoffkanals zueinander verschieden sind. Derart können unterschiedliche Durchflussmengen an Treibstoff durch die Treibstoffkanäle der Düsen der mindestens drei unterschiedlichen Typen vorgegeben werden. Beispielsweise sind je nach Typ von Düse unterschiedliche Treibstoffmengen über den jeweiligen Querschnitt vorgegeben, somit zum Beispiel bei zwei oder drei unterschiedlichen Typen von Düsen zwei oder drei unterschiedliche Durchflussmengen.

Die Düsen unterschiedlichen Typs, insbesondere ihre Düsenaustrittsöffnungen sind beispielsweise entlang einer Kreislinie nebeneinander angeordnet. Eine solche Anordnung eignet sich insbesondere für die Verwendung in einer ringförmigen Brennkammer eines Gasturbinentriebwerks.

Die Düsenaustrittsöffnungen der Düsen unterschiedlichen Typs können beispielsweise äquidistant nebeneinander angeordnet sein, insbesondere entlang der vorstehend bereits angesprochenen Kreislinie. Jede Düsenaustrittsöffnung ist somit mittig mit gleichem Abstand zu zwei benachbarten (rechten und linken) Düsenaustrittsöffnungen angeordnet, unabhängig vom Typ der jeweiligen, die Düsenaustrittsöffnung aufweisenden Düse.

In einer Ausführungsvariante können Düsenaustrittsöffnungen der Düsen unterschiedlicher Typen ungleich verteilt nebeneinander angeordnet sein. Eine solche ungleiche Verteilung schließt insbesondere ein, dass unterschiedliche Abstände zwischen benachbarten Düsenaustrittsöffnungen vorhanden sind, wie auch, dass Düsenaustrittsöffnungen der unterschiedlichen Düsen verschieden häufig, z.B. entlang einer Kreislinie, angeordnet sind. Im letztgenannten Fall ist zum Beispiel ein Paar eng(er) beieinander liegender Düsenaustrittsöffnungen zweier Düsen eines ersten Typs vorgesehen. Dieses Paar liegt dann mit einem (verglichen zu dem Abstand zwischen den zwei Düsenaustrittsöffnungen des ersten Typs) größeren Abstand zu mindestens einer benachbart vorliegenden Düsenaustrittsöffnung eines anderen, zweiten Typs von Düse vor. Ein Abstand zwischen zwei Düsenaustrittsöffnungen desselben Typs kann somit geringer (oder größer) sein als ein Abstand zweier Düsenaustrittsöffnungen unterschiedlicher Typen. So kann über die Anordnung der Düsenaustrittsöffnungen im Zusammenspiel mit den unterschiedlichen Luft-Treibstoff-Verhältnissen die Verbrennung im Brennraum und die hierbei entstehenden Rußemissionen gezielt und äußerst variabel eingestellt werden.

In einer Variante wechseln sich Düsenaustrittsöffnungen von Düsen unterschiedlichen Typs miteinander ab. Derart folgt dann beispielsweise auf eine Düsenaustrittsöffnung eines Typs von Düse eine Düsenaustrittsöffnung eines anderen Typs von Düse. Mit anderen Worten ist hier stets eine Düsenaustrittsöffnung einer Düse eines Typs benachbart zu einer Düsenaustrittsöffnung einer Düse eines anderen Typs vorgesehen.

Erfindungsgemäß ist mindestens einem Typ von Düse eine Durchflusssteuerung zugeordnet und dem Treibstoffkanal vorgeschaltet. Mittels der Durchflusssteuerung ist eine dem Treibstoffkanal zuführbare Menge Treibstoff einstellbar. Hierbei wird der Querschnitt des in einer Düse starr ausgebildeten Treibstoffkanals nicht variiert, jedoch die diesem Treibstoffkanal zugeführte Menge Treibstoff. So kann sich eine derartige Durchflusssteuerung beispielsweise auch außerhalb eines Brennkammergehäuses befinden, an dem (radial) innenliegend die einzelnen Düsen der Düsenbaugruppe festgelegt sind.

Die Verwendung einer Durchflusssteuerung ist dabei in einer hierauf basierenden Weiterbildung einem Typ von Düse zugeordnet, deren Treibstoffkanal den größten Querschnitt aufweist. Über die dem Treibstoffkanal vorgeschaltete Durchflusssteuerung kann dann die Menge des zugeführten Treibstoffs stromauf des Treibstoffkanals auf ein Maß reduziert sein, welches im Wesentlichen der Durchflussmenge entspricht, die über den Treibstoffkanal einer Düse eines anderen Typs mit dem kleinsten Querschnitt an eine Düsenaustrittsöffnung gefördert werden kann. Dabei kann die Durchflusssteuerung beispielsweise einen hinsichtlich seines Querschnitts variablen Zuleitungskanal aufweisen. Der Querschnitt dieses Zuleitungskanals kann beispielsweise auf den kleinsten Querschnitt des anderen Typs von Düse einstellbar sein, sodass letztlich die Durchflussmenge an Treibstoff über alle Düsen unabhängig von ihrem Typ identisch ist. Die Einstellung einer ungleichmäßigen Verteilung des der Brennkammer zugeführten Treibstoffs über die einzelnen Düsen der Düsenbaugruppe, der für die Rußreduzierung und die Reduzierung thermoakustischer Schwingungen, vor allem im Niederlastbereich eines Triebwerks, vorteilhaft sein kann, ist somit über die Durchflusssteuerung bei Bedarf abschaltbar, zum Beispiel für den Hochlastbereich des Triebwerks und damit zum Beispiel beim Reiseflug eines mit dem Triebwerk ausgestatteten Flugzeugs.

Eine Durchflusssteuerung für die Einstellung der dem Treibstoffkanal zuführbare Menge an Treibstoff kann beispielsweise eine druckabhängig steuerbare, passive Ventileinrichtung und/oder eine elektrisch steuerbare, aktive Ventileinrichtung umfassen. Hierbei ist insbesondere auch eine Ausführungsvariante eingeschlossen, bei der eine oder mehrere Ventileinrichtungen der Durchflusssteuerung außerhalb der jeweiligen Düse angeordnet sind. Beispielsweise befindet sich die mindestens eine Ventileinrichtung der Durchflusssteuerung, mittels der die Menge an Treibstoff, der dem jeweiligen Treibstoffkanal der Düse zuzuführen ist, variabel eingestellt werden kann, an einer (radial) äußeren Seite eines Brennkammergehäuses, während die zugeordnete Düse mit ihrem Treibstoffkanal auf einer (radial) inneren Seite eines Brennkammergehäuses vorgesehen ist.

Die beigefügten Figuren veranschaulichen exemplarisch mögliche Ausführungsvarianten der vorgeschlagenen Lösung.

Hierbei zeigen:
- Figur 1A: ausschnittsweise eine Düse eines ersten Typs für ein Ausführungsbeispiel einer Düsenbaugruppe;
- Figur 1B: in mit der Figur 1A übereinstimmender Ansicht ausschnittsweise eine Düse eines zweiten Typs mit einem Treibstoffkanal größeren Querschnitts;
- Figur 1C: einen Brennkammerring der Düsenbaugruppe mit mehreren Düsen unterschiedlichen Typs;
- Figur 2: einen Brennkammerring entsprechend der Figur 1C mit einer abweichenden Anordnung von Düsen unterschiedlichen Typs;
- Figur 3: einen weiteren Brennkammerring entsprechend der Figur 1C mit einer abweichenden Anordnung von Düsen unterschiedlichen Typs
- Figuren 4A-4B: eine weitere Ausführungsvariante einer Düse für eine Düsenbaugruppe, bei der der Düse des dargestellten Typs eine Durchflusssteuerung vorgeschaltet ist, um eine Treibstoffmenge zu einem Treibstoffkanal der Düse zu variieren;
- Figur 5: ein Diagramm, in der eine Verlaufskurve für die entstehende Menge Ruß über dem Luft-Treibstoff-Verhältnis aufgetragen ist;
- Figur 6A: ein Triebwerk, in dem eine Brennkammer mit einer Düsenbaugruppe zum Einsatz kommt;
- Figur 6B: ausschnittsweise und in vergrößertem Maßstab die Brennkammer mit einer Düse einer Düsenbaugruppe;
- Figuren 7A-7C: in mit den Figuren 1A bis 1C übereinstimmenden Ansichten eine aus dem Stand der Technik bekannte Düse und ein hiermit ausgestatteter Brennkammerring einer Düsenbaugruppe.

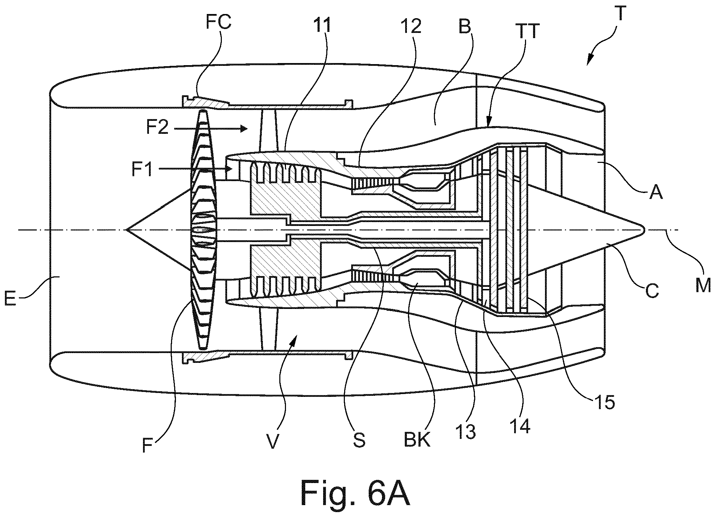

Die Figur 6A veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind und das Triebwerk T als Turbofan-Triebwerk ausgebildet ist. An einem Einlass oder Intake E des Triebwerks T wird Luft entlang einer Eintrittsrichtung mittels eines Fans F angesaugt. Dieser in einem Fangehäuse FC angeordnete Fan F wird über eine Rotorwelle S angetrieben, die von einer Turbine TT des Triebwerks T in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits in einem Primärluftstrom F1 dem Verdichter V Luft zu sowie andererseits, zur Erzeugung des Schubs, in einem Sekundärluftstrom F2 einem Sekundärstromkanal oder Bypasskanal B. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst.

Die über den Verdichter V in den Primärstromkanal geförderte Luft gelangt in einen Brennkammerabschnitt BK des Kerntriebwerks, in dem die Antriebsenergie zum Antreiben der Turbine TT erzeugt wird. Die Turbine TT weist hierfür eine Hochdruckturbine 13, eine Mitteldruckturbine 14 und einen Niederdruckturbine 15 auf. Die Turbine TT treibt dabei über die bei der Verbrennung frei werdende Energie die Rotorwelle S und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Austrittskonus C auf.

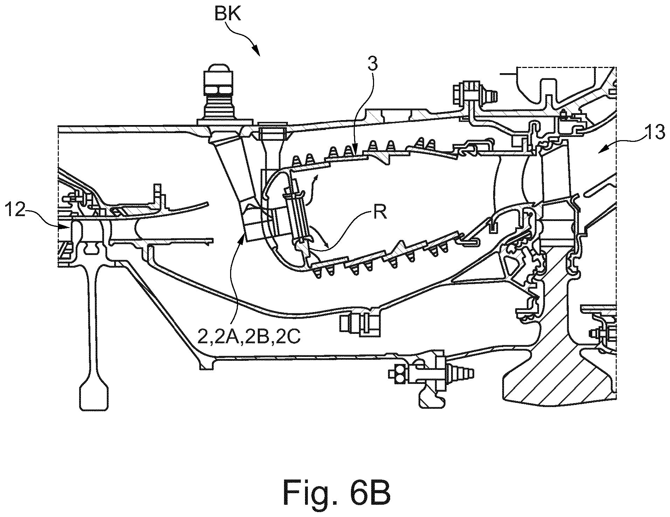

Figur 6B zeigt einen Längsschnitt durch den Brennkammerabschnitt BK des Triebwerks T. Hieraus ist insbesondere in eine (Ring-) Brennkammer 3 des Triebwerks T ersichtlich. Zur Einspritzung von Kraftstoff respektive eines Luft-Kraftstoff-Gemisches in die Brennkammer 3 ist eine Düsenbaugruppe vorgesehen. Diese umfasst einen Brennkammerring R, an dem entlang einer Kreislinie um die Mittelachse M mehrere (Treibstoff- Düsen 2 oder 2A, 2B, 2C angeordnet sind. Hierbei sind an dem Brennkammerring R die Düsenaustrittsöffnungen der jeweiligen Düsen 2, 2A, 2B, 2C vorgesehen, die innerhalb der Brennkammer 3 liegen. Jede Düse 2, 2A, 2B, 2C umfasst dabei einen Flansch 22, über den eine Düse 2, 2 A, 2B, 2C an ein Brennkammergehäuse der Brennkammer 3 geschraubt ist.

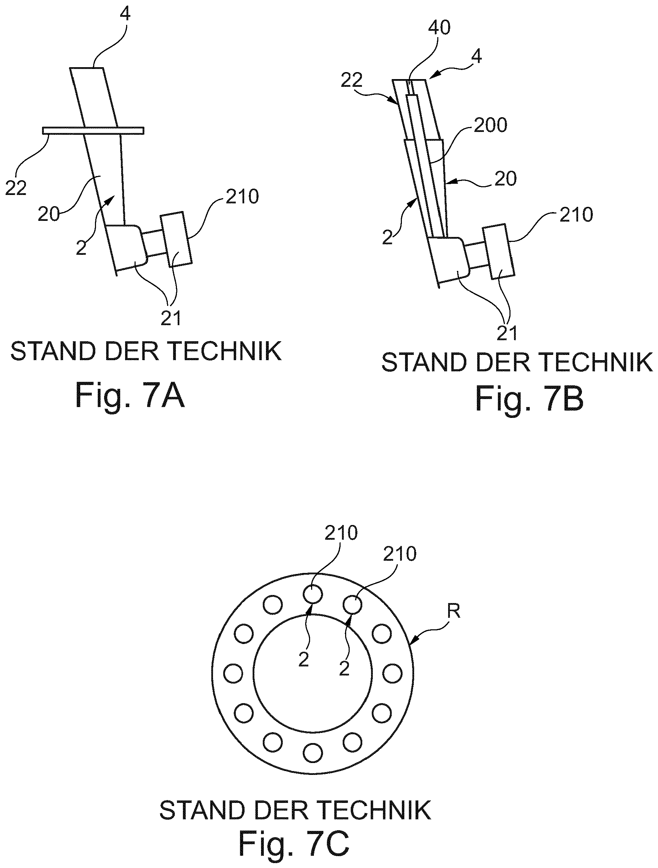

Ein aus dem Stand der Technik bekannter Aufbau einer Düse 2 und einer hiermit gebildeten Düsenbaugruppe ist anhand der Figuren 7A, 7B und 7C näher veranschaulicht. Hierbei umfasst jede Düse 2 neben dem Flansch 22 zur Fixierung an dem Brennkammergehäuse Verteilungs-/Zumischelemente 21 zum Verdrallen der Luft und zum Zumischen des Treibstoffs, sodass an einer Düsenaustrittsöffnung 210 der Düse 2 das gewünschte Luft-Treibstoff-Gemisch ausgebracht werden kann. Die Verteilung-/ Zumischelemente 21 sind über einen Stamm 20 der Düse 2 mit dem Flansch 22 verbunden. In diesem Stamm 20 ist ein Treibstoffkanal 220 ausgebildet, über den Treibstoff in Richtung der Düsenaustrittsöffnung 210 gefördert wird. Außerhalb des Brennkammergehäuses ist eine Treibstoffzuführung 4, zum Beispiel in Form eines Treibstoffmanifolds vorgesehen. Diese Treibstoffzuführung 4 verfügt über eine Schnittstelle zur Kopplung an den Stamm 20, sodass ein Zuleitungskanal 40 der Treibstoffzuführung 4 mit dem Treibstoffkanal 200 der Düse 2 verbunden werden kann, um Treibstoff aus der Treibstoffzuführung 4 dem Treibstoffkanal 200 der Düse 2 zuzuführen.

Entsprechend der Querschnittsdarstellung der Figur 7B kann an dem Zuleitungskanal 40 ein Abschnitt mit reduziertem Querschnitt am stromauf gelegenen Beginn des Zuleitungskanals 40 vorgesehen sein, um eine bestimmte Durchflussmenge an Treibstoff in Richtung der Düsenaustrittsöffnung 210 einzustellen. Ein solcher verengter Durchmesser kann auch an einem Abschnitt des Treibstoffkanals 200 der Düse 2 selbst vorgesehen sein. Der jeweilige verengte Bereich mit reduziertem Querschnitt variiert dabei je nach Triebwerk T.

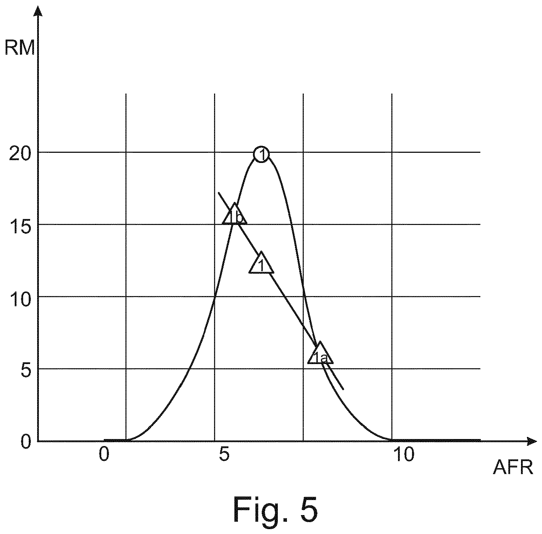

Bei einer aus dem Stand der Technik bekannte Düsenbaugruppe sind entsprechend der Figur 7C identisch ausgebildete Düsen 2 entlang einer Kreislinie an dem Brennkammerring R am Umfang verteilt vorgesehen. Die einzelnen Düsen 2 unterscheiden sich strukturell nicht und weisen auch identische Treibstoffkanäle 220 auf. Wird nun das Triebwerk T zum Beispiel beim Start des Triebwerks T in einem Betriebsbereich gefahren, bei dem ein Luft-Treibstoff-Verhältnis AFR einen Bereich von 0 bis 20 durchfährt, können hohe Rußemissionen entstehen. Dies ist beispielsweise anhand des Diagramms der Figur 5 ersichtlich, in der die Rußmenge RN über dem Luft-Treibstoff-Verhältnis AFR aufgetragen ist. Beim Starten des Triebwerks T wird insbesondere das Maximum der dargestellten Verlaufskurve durchfahren (Punkt "1" im Kreis). Darüber hinaus neigen die Düsen 2 bei einer Düsenbaugruppe des Standes der Technik entsprechend der Figuren 7A bis 7C in einem Niederlastbereich zu thermoakustischen Schwingungen.

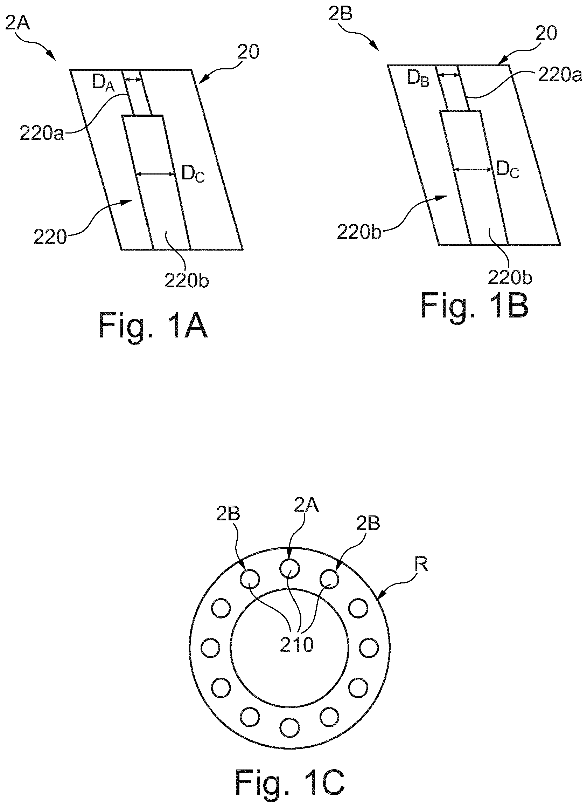

In Abweichung von der in den Figuren 7A bis 7C aus dem Stand der Technik bekannten Lösung ist bei einer Ausführungsvariante der Figuren 1A bis 1C vorgesehen, Düsen 2A und 2B unterschiedlichen Typs in einer Düsenbaugruppe zu verwenden, die sich hinsichtlich des kleinsten Durchmessers ihres jeweiligen Treibstoffkanals 220 voneinander unterscheiden. So wird über den jeweiligen kleinsten Querschnitt eines Treibstoffkanals 220 die an die Düsenaustrittsöffnung 210 zu fördernde Menge an Treibstoff eingestellt. Durch Vergrößerung oder Verkleinerung dieses Querschnitts wird das Luft-Treibstoff-Verhältnis AFR in der (theoretischen) Verlaufskurve der Figur 5 für jede Düse 2A, 2B nach rechts oder links des Maximalwertes verschoben. Damit das Gesamtverhältnis, das heißt das Verhältnis der Gesamtluft zur Gesamttreibstoffmenge in der Brennkammer 3 und damit der Triebwerksschub konstant bleiben, sind bei den unterschiedlichen Typen von Düsen 2A und 2B Düsen 2A mit einem Treibstoffkanal 220 - gegenüber einem Referenzquerschnitt - lokal verringerten Querschnitts und Düsen 2B mit einem Treibstoffkanal lokal vergrößerten Querschnitts vorgesehen. Diese Düsen 2A und 2B wechseln sich entsprechende Figur 1C über den Umfang des Brennkammerrings R ab. Dabei weisen die Düsen 2A und 2B unterschiedlichen Typs Düsenaustrittsöffnungen 210 mit identischem Durchmesser auf. Über die unterschiedliche Gestaltung des jeweiligen Treibstoffkanals 220 ist jedoch die einer Düsenaustrittsöffnung 210 zuzuführende Treibstoffmenge unterschiedlich eingestellt.

Sowohl bei einer Düse 2A eines ersten Typs entsprechend der Figur 1A als auch bei einer Düse 2B eines zweiten Typs entsprechend der Figur 1B weist der Treibstoffkanal 220 aufeinanderfolgende Kanalabschnitte 220a und 220b mit verschiedenen Querschnitten auf. Ein jeweiliger bezogen auf die Strömungsrichtung des Treibstoffs in Richtung der Düsenaustrittsöffnung 210 stromauf gelegener erster Kanalabschnitt 220a ist dabei gegenüber einem nachfolgenden, zweiten Kanalabschnitt 220b verengt. Dieser erste Kanalabschnitt 220a mit dem kleinsten Querschnitt gibt dabei die Treibstoffmenge vor. Ein Durchmesser D_{A}, D_{B} des ersten Kanalabschnitts 220a liegt dabei im Bereich von etwa 50% eines Durchmessers D_{C} des zweiten Kanalabschnitts 220b des Treibstoffkanals 220. Die Längen der ersten und zweiten Kanalabschnitte 220a und 220b sind bei den Düsen 2A und 2B unterschiedlichen Typs vorliegend identisch. Ebenso ist der Durchmesser D_{C} des zweiten Kanalabschnitts 220b, der in Richtung der Düsenaustrittsöffnung 210 auf den ersten Kanalabschnitt 220a erfolgt, bei den Düsen 2A und 2B der beiden unterschiedlichen Typen identisch.

Beispielsweise liegt aber der Durchmesser D_{A} des ersten Kanalabschnitts 220a bei einer Düse 2A des ersten Typs entsprechend der Figur 1A bei etwa 1,9 mm. Der Durchmesser D_{A} ist damit um wenigstens 3,5 %, jedoch um maximal 5 % geringer ein Referenzdurchmesser, der bei 2 mm liegt (und damit zu einem Referenzquerschnitt von ca. 3,14 mm² gehört). Bei einer Düse 2B des anderen, zweiten Typs unterscheidet sich die Durchmesser D_{B} und mithin der die Treibstoffmenge vorgebende kleinste Querschnitt des ersten Kanalabschnitts 220a vom Durchmesser D_{A} der Düse 2A des ersten Typs. Bei der Düse 2B des zweiten Typs liegt der Durchmesser D_{B} bei 2,1 mm und ist damit wenigstens um 7%, maximal um 10% größer als der Durchmesser D_{A} der Düse 2A des ersten Typs.

Über die unterschiedlichen, die Treibstoffmenge vorgebenden Durchmesser D_{A} und D_{B} der zwei unterschiedlichen Düsentypen wird die eine Düse 2A mit einem größeren Luft-Treibstoff-Verhältnis AFR betrieben als die Düse 2B des anderen Typs, die mithin fetter betrieben wird. Gleichwohl weicht in Summe die gesamte Treibstoffmenge, die über die Düsenbaugruppe in die Brennkammer 3 eingebracht wird, gegenüber eines Düsenbaugruppe aus dem Stand der Technik mit identischen Düsen 2 nicht (in relevantem Maß) ab.

Bei einer Düsenbaugruppe der Ausführungsvariante der Figuren 1A bis 1C werden somit Düsen 2A, 2B unterschiedlichen Typs verwendet, die einander entlang des Brennkammerrings R abwechseln, sodass zum Beispiel bei insgesamt zwölf Düsen 2A, 2B sechs Düsen 2A des einen, ersten Typs und sechs Düsen 2B des anderen, zweiten Typs vorgesehen sind. Die Düsen 2A, 2B unterschiedlichen Typs werden dabei aufgrund der unterschiedlichen Durchmesser D_{A} und D_{B} und damit der unterschiedlichen Querschnitte, die die zu fördernde Treibstoffmenge vorgeben, mit unterschiedlichen Luft-Treibstoff-Verhältnissen AFR betrieben. Vorliegend liegen dann die Betriebspunkte im Fall der Düsen 2A des ersten Typs entsprechend der Figur 5 rechts des Höhepunkts (bei einem Punkt "1a" im Diagramm der Figur 5), während die Betriebspunkte der Düsen 2B des zweiten Typs, die fetter betrieben werden, links des Höhepunkts liegen (bei einem Punkt "1b" im Diagramm der Figur 5). Die Emissionen der Düsenbaugruppe können somit signifikant gegenüber der aus dem Stand der Technik bekannten Lösung der Figur 7C mit identischen Düsen 2 gesenkt werden. Beispielsweise liegt ein gemittelter Wert für eine Rußmenge aus beiden Düsentypen in einem Maximalbereich um 30 % unter der Rußmenge einer Düsenbaugruppe des Standes der Technik. Im Übrigen gibt es eine starke Abhängigkeit der thermoakustischen Sensitivität zu dem (lokalen) Luft-Treibstoff-Verhältnis AFR an den einzelnen Düsen 2A, 2B. Daher führt die Verwendung unterschiedlicher Typen von Düsen 2A, 2B auch zu einer Verstimmung der benachbarten Düsen 2A, 2B zueinander, sodass deren thermoakustisches Verhalten geändert und so die Anregbarkeit zu Schwingungen respektive die Schwingungsamplituden positiv beeinflusst werden.

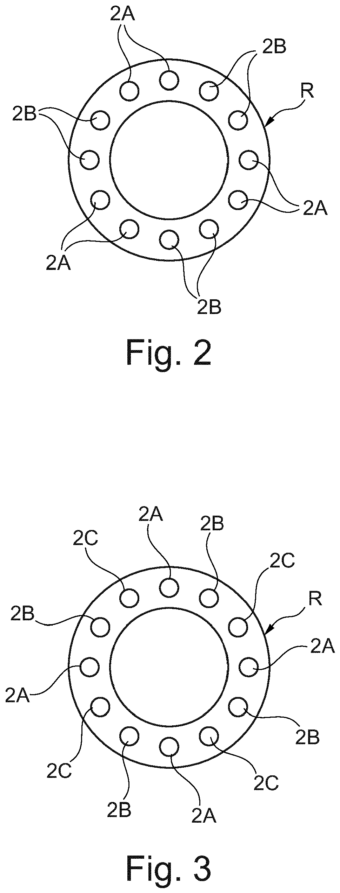

Wie anhand der Figuren 2 und 3 mit dem Blick auf einen Brennkammerring R möglicher alternativer Ausführungsvarianten einer Düsenbaugruppe veranschaulicht ist, müssen sich die Düsen 2A und 2B nicht zwingend abwechseln. Ferner können auch mehr als zwei unterschiedliche Typen von Düsen 2A, 2B und 2C vorgesehen sein, die sich jeweils hinsichtlich der die Treibstoffmenge vorgebenden Querschnitte ihres Treibstoffkanals 220 voneinander unterscheiden.

Bei der Variante der Figur 2A sind beispielsweise jeweils Düsen 2A und 2B unterschiedlichen Typs paarweise angeordnet. Auf zwei nebeneinander liegende Düsen 2A, 2A eines Typs (ein Paar Düsen 2A/2A) folgen dementsprechend dann zwei Düsen 2B, 2B des anderen Typs (ein Paar Düsen 2B/2B).

Bei der Variante der Figur 3 sind drei unterschiedliche Typen von Düsen 2A, 2B und 2C vorgesehen die einander abwechselnd entlang des Brennkammerrings R angeordnet sind. Hier sind an jeder dritten Position Düsen 2A, 2B oder 2C desselben Typs vorgesehen, sodass zum Beispiel bei insgesamt zwölf Düsen einer Düsenbaugruppe jeweils vier Düsen 2A, 2B und 2C eines Typs vorhanden sind.

Abweichend von den Darstellungen in den Figuren 1C, 2 und 3, bei denen die einzelnen Düsen 2A, 2B, 2C einer Düsenbaugruppe an dem Brennkammerring R äquidistant angeordnet sind, können in möglichen Weiterbildungen Düsen unterschiedlichen Typs auch ungleich verteilt an dem Brennkammerring R vorgesehen sein.

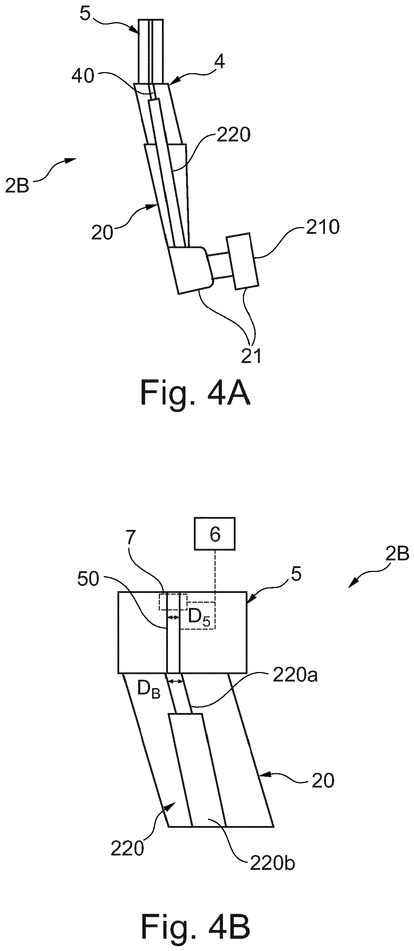

Bei einer Weiterbildung entsprechend der Figuren 4A und 4B ist einer exemplarisch dargestellten Düse 2B ferner eine Durchflusssteuerung 5 zugeordnet. Über diese Durchflusssteuerung 5 lässt sich die Menge an Treibstoff variabel einstellen, die dem Treibstoffkanal 220 der Düse 2B zugeführt wird. So ist zum Beispiel für einen Hochlastbereich im Betrieb des Triebwerks T eine ungleichmäßige Verteilung des Treibstoffs über die Düsen 2A, 2B unterschiedlichen Typs über den Umfang des Brennkammerrings R und damit der Brennkammer 3 nicht gewünscht. Die Durchflusssteuerung 5 ist hierfür an einer Düse 2B des zweiten Typs dem ersten Kanalabschnitt 220a mit dem engsten Querschnitt vorgeschaltet, um den Durchfluss an Treibstoff separat zu regeln und mithin identisch zu einer Durchflussmenge einzustellen, die durch den kleinsten Querschnitt des Treibstoffkanals 220 des ersten Typs von Düse 2A vorgegeben ist. So sind die Querschnitte und die Durchmesser D_{A}, D_{B} der Treibstoffkanäle 220 der Düsen 2A und 2B der unterschiedlichen Typen nicht variabel. Über die einem Typ von Düse 2B vorgeschaltete Durchflusssteuerung 5 lässt sich nun aber die Durchflussmenge an Treibstoff derart regulieren, dass identische Mengen an Treibstoff an die Düsenaustrittsöffnungen 210 der unterschiedlichen Typen von Düsen 2A, 2B gelangen.

Die Durchflusssteuerung 5 kann hierfür einen variablen Zuleitungskanal 50 aufweisen. Dieser Zuleitungskanal 50, über den Treibstoff zu dem Treibstoffkanal 220 der Düse 2B gelangt, kann in seinem Querschnitt variabel sein. So kann beispielsweise ein Durchmesser D₅ dieses Zuleitungskanals 50 je nach Betriebsbereich des Triebwerks T variabel einstellbar sein. Alternativ oder ergänzend weist die Durchflusssteuerung 5 wenigstens eine Ventileinrichtung zur Steuerung der Durchflussmenge zu dem Treibstoffkanal 220 der Düse 2B auf. Eine solche Ventileinrichtung kann druckabhängig steuerbar und mithin passiv sein. Ebenso kann eine solche Ventileinrichtung elektrisch steuerbar und mithin aktiv sein. Die Ventileinrichtung 7 kann somit ein druckabhängiges Ventil oder ein aktiv ansteuerbares Ventil umfassen.

Für eine gezielte, variable Steuerung des Durchflusses über die Durchflusssteuerung 5 kann eine Durchflusssteuerungselektronik 6 vorgesehen sein. Diese stellt die an einen jeweiligen Treibstoffkanal 220 einer Düse 2B zur Verfügung zustellende Menge an Treibstoff mithilfe der Durchflusssteuerung 5 variabel in Abhängigkeit von dem jeweiligen Betriebsbereich des Triebwerks T ein. Hierfür steuert Durchflusssteuerungselektronik 6 beispielsweise eine Verstellbewegung einer Seitenwandung des Zuleitungskanals 50, um dessen Durchmesser D₅ zu verändern, und/oder eine Ventileinrichtung 7.

### Bezugszeichenliste

- 11: Niederdruckverdichter
- 12: Hochdruckverdichter
- 13: Hochdruckturbine
- 14: Mitteldruckturbine
- 15: Niederdruckturbine
- 2, 2A, 2B, 2C: Düse
- 20: Stamm
- 21: Verdrallungs- / Zumischelement
- 210: Düsenaustrittsöffnung
- 22: Flansch
- 220: Treibstoffkanal
- 220a, 220b: Kanalabschnitt
- 3: (Ring-) Brennkammer
- 4: Treibstoffzuführung
- 40: Zuleitungskanal
- 5: Durchflusssteuerung
- 50: Variabler Zuleitungskanal
- 6: Durchflusssteuerungselektronik
- 7: Ventileinrichtung
- A: Auslass
- B: Bypasskanal
- BK: Brennkammerabschnitt
- C: Auslasskonus
- D_{A}, D_{B}, D_{C}, D₅: (mittlerer) Durchmesser
- E: Einlass / Intake
- F: Fan
- F1, F2: Fluidstrom
- FC: Fangehäuse
- M: Mittelachse / Rotationsachse
- R: Brennkammerring
- S: Rotorwelle
- T: (Turbofan-)Triebwerk
- TT: Turbine
- V: Verdichter

## Patentansprüche

1. Düsenbaugruppe für eine Brennkammer (3) eines Triebwerks (T), mit mehreren nebeneinander angeordneten Düsen (2A, 2B, 2C) zur Einbringung von Treibstoff in die Brennkammer (3), wobei jede Düse (2A, 2B, 2C) eine Düsenaustrittsöffnung (210) und einen Treibstoffkanal (220) zur Förderung von Treibstoff in Richtung der Düsenaustrittsöffnung (210) aufweist, wobei mindestens zwei unterschiedliche Typen von Düsen (2A, 2B, 2C) vorgesehen sind, wobei
- die Düsen (2A, 2B, 2C) unterschiedlicherTypen Düsenaustrittöffnungen (210) mit identischem Querschnitt aufweisen, und
- zur Vorgabe unterschiedlicher Durchflussmengen an Treibstoff durch die Treibstoffkanäle der unterschiedlicher Typen von Düsen (2A, 2B, 2C) ein Querschnitt eines Treibstoffkanals (220) eines Typs von Düse (2A, 2B, 2C) zu einem Querschnitt eines Treibstoffkanals (220) eines anderen Typs von Düse (2B, 2C, 2A) verschieden ist, **dadurch gekennzeichnet, dass**
- mindestens einem Typ von Düse (2B) eine Durchflusssteuerung (5) zugeordnet und dem Treibstoffkanal (220) vorgeschaltet ist, mittels der eine dem Treibstoffkanal (220) zuführbare Menge Treibstoff einstellbar ist, wobei die Durchflusssteuerung dem Typ von Düse (2B) zugeordnet ist, deren Treibstoffkanal (220) den größten Querschnitt aufweist.

2. Düsenbaugruppe nach Anspruch 1, **dadurch gekennzeichnet, dass** ein Treibstoffkanal (220) wenigstens eines Typs von Düse (2A, 2B, 2C) mindestens zwei Abschnitte (220a, 220b) mit unterschiedlichen Querschnitten umfasst und der kleinste Querschnitt eines Treibstoffkanals (220) dieses Typs von Düse (2A, 2B, 2C) zu dem kleinsten Querschnitt eines Treibstoffkanals (220) eines anderen Typs von Düse (2B, 2C, 2A) verschieden ist.

3. Düsenbaugruppe nach Anspruch 1 oder 2, **dadurch gekennzeichnet, dass**, bezogen auf einen Referenzquerschnitt, ein Querschnitt eines Treibstoffkanals (220) des einen Typs von Düse (2A) um mindestens 3% kleiner ist als der Referenzquerschnitt, während ein Querschnitt eines Treibstoffkanals (220) des anderen Typs von Düse (2B) um mindestens 7% größer ist als der Querschnitt des Treibstoffkanals (220) des einen Typs von Düse (2A).

4. Düsenbaugruppe nach einem der Ansprüche 1 bis 3, **dadurch gekennzeichnet, dass**, bezogen auf einen Referenzquerschnitt, ein Querschnitt eines Treibstoffkanals (220) des einen Typs von Düse (2A) um maximal 5% kleiner ist als der Referenzquerschnitt, während ein Querschnitt eines Treibstoffkanals (220) des anderen Typs von Düse (2B) um maximal 10% größer ist als der Querschnitt des Treibstoffkanals (220) des einen Typs von Düse (2A).

5. Düsenbaugruppe nach Anspruch 3 oder 4, **dadurch gekennzeichnet, dass** der Referenzquerschnitt im Bereich von 0,75 mm² bis 20 mm² liegt.

6. Düsenbaugruppe nach Anspruch 5, **dadurch gekennzeichnet, dass** der Referenzquerschnitt im Bereich von 2,5 mm² bis 3,9 mm² liegt.

7. Düsenbaugruppe nach einem der vorhergehenden Ansprüche, **dadurch gekennzeichnet, dass** ein Querschnitt des einen Typs von Düse (2A) einen mittleren Durchmesser (D_{A}) im Bereich von 1,85 mm bis 1,95 mm aufweist und ein Querschnitt des anderen Typs von Düse (2B) einen mittleren Durchmesser (D_{B}) im Bereich von 2,05 mm bis 2,15 mm aufweist.

8. Düsenbaugruppe nach einem der vorhergehenden Ansprüche, **dadurch gekennzeichnet, dass** mindestens drei unterschiedliche Typen von Düsen (2A, 2B, 2C) vorgesehen sind, die jeweils hinsichtlich des Querschnitts eines jeweiligen Treibstoffkanals (220) zueinander verschieden sind, sodass mindestens drei unterschiedliche Durchflussmengen an Treibstoff durch die Treibstoffkanäle der Düsen (2A, 2B, 2C) der mindestens drei unterschiedlicher Typen vorgegeben sind.

9. Düsenbaugruppe nach einem der vorhergehenden Ansprüche, **dadurch gekennzeichnet, dass** die Düsen (2A, 2B, 2C) unterschiedlichen Typs entlang einer Kreislinie nebeneinander angeordnet sind.

10. Düsenbaugruppe nach einem der vorhergehenden Ansprüche, **dadurch gekennzeichnet, dass** die Düsenaustrittsöffnungen (210) der Düsen (2A, 2B, 2C) unterschiedlichen Typs äquidistant nebeneinander angeordnet sind.

11. Düsenbaugruppe nach einem der vorhergehenden Ansprüche, **dadurch gekennzeichnet, dass** die Düsenaustrittsöffnungen (210) der Düsen (2A, 2B, 2C) unterschiedlichen Typs ungleich verteilt nebeneinander angeordnet sind.

12. Düsenbaugruppe nach einem der vorhergehenden Ansprüche, **dadurch gekennzeichnet, dass** die Düsenaustrittsöffnungen (210) der Düsen (2A, 2B, 2C) unterschiedlichen Typs einander abwechselnd angeordnet sind.

13. Düsenbaugruppe nach einem der vorstehenden Ansprüche, **dadurch gekennzeichnet, dass** die Durchflusssteuerung eine druckabhängig steuerbare, passive Ventileinrichtung (7) und/oder eine elektrisch steuerbare, aktive Ventileinrichtung (7) umfasst

## Claims

1. Nozzle assembly for a combustion chamber (3) of an engine (T), comprising a plurality of nozzles (2A, 2B, 2C) arranged next to one another for introducing fuel into the combustion chamber (3), wherein each nozzle (2A, 2B, 2C) has a nozzle outlet opening (210) and a fuel duct (220) for conveying fuel in the direction of the nozzle outlet opening (210), wherein at least two different types of nozzles (2A, 2B, 2C) are provided, wherein
- the nozzles (2A, 2B, 2C) of different types have nozzle outlet openings (210) with an identical cross section, and
- to specify different through-flow rates of fuel through the fuel ducts of the different types of nozzles (2A, 2B, 2C), a cross section of a fuel duct (220) of one type of nozzle (2A, 2B, 2C) is different from a cross section of a fuel duct (220) of another type of nozzle (2B, 2C, 2A), **characterized in that**
- a through-flow controller (5) is assigned to at least one type of nozzle (2B) and connected upstream of the fuel duct (220) and by means of which a quantity of fuel that can be supplied to the fuel duct (220) can be set, wherein the through-flow controller is assigned to the type of nozzle (2B) whose fuel duct (220) has the largest cross section.

2. Nozzle assembly according to Claim 1, **characterized in that** a fuel duct (220) of at least one type of nozzle (2A, 2B, 2C) comprises at least two portions (220a, 220b) having different cross sections, and the smallest cross section of a fuel duct (220) of this type of nozzle (2A, 2B, 2C) is different from the smallest cross section of a fuel duct (220) of another type of nozzle (2B, 2C, 2A).

3. Nozzle assembly according to Claim 1 or 2, **characterized in that**, with respect to a reference cross section, a cross section of a fuel duct (220) of the one type of nozzle (2A) is smaller by at least 3% than the reference cross section, whereas a cross section of a fuel duct (220) of the other type of nozzle (2B) is larger by at least 7% than the cross section of the fuel duct (220) of the one type of nozzle (2A).

4. Nozzle assembly according to one of Claims 1 to 3, **characterized in that**, with respect to a reference cross section, a cross section of a fuel duct (220) of the one type of nozzle (2A) is smaller by a maximum of 5% than the reference cross section, whereas a cross section of a fuel duct (220) of the other type of nozzle (2B) is larger by a maximum of 10% than the cross section of the fuel duct (220) of the one type of nozzle (2A).

5. Nozzle assembly according to Claim 3 or 4, **characterized in that** the reference cross section lies in the range from 0.75 mm² to 20 mm².

6. Nozzle assembly according to Claim 5, **characterized in that** the reference cross section lies in the range from 2.5 mm² to 3.9 mm².

7. Nozzle assembly according to one of the preceding claims, **characterized in that** a cross section of the one type of nozzle (2A) has an average diameter (D_{A}) in the range from 1.85 mm to 1.95 mm, and a cross section of the other type of nozzle (2B) has an average diameter (D_{B}) in the range from 2.05 mm to 2.15 mm.

8. Nozzle assembly according to one of the preceding claims, **characterized in that** at least three different types of nozzles (2A, 2B, 2C) are provided which each differ from one another in terms of the cross section of a respective fuel duct (220), such that at least three different through-flow rates of fuel through the fuel ducts of the nozzles (2A, 2B, 2C) of the at least three different types are specified.

9. Nozzle assembly according to one of the preceding claims, **characterized in that** the nozzles (2A, 2B, 2C) of different type are arranged next to one another along a circular line.

10. Nozzle assembly according to one of the preceding claims, **characterized in that** the nozzle outlet openings (210) of the nozzles (2A, 2B, 2C) of different type are arranged equidistantly next to one another.

11. Nozzle assembly according to one of the preceding claims, **characterized in that** the nozzle outlet openings (210) of the nozzles (2A, 2B, 2C) of different type are arranged next to one another in an unequally distributed manner.

12. Nozzle assembly according to one of the preceding claims, **characterized in that** the nozzle outlet openings (210) of the nozzles (2A, 2B, 2C) of different type are arranged so as to alternate with one another.

13. Nozzle assembly according to one of the preceding claims, **characterized in that** the through-flow controller comprises a pressure-dependently controllable, passive valve device (7) and/or an electrically controllable, active valve device (7).

## Revendications

1. Sous-ensemble de buses pour une chambre de combustion (3) d'un groupe motopropulseur (T), comprenant plusieurs buses (2A, 2B, 2C) disposées les unes à côté des autres servant à introduire du carburant dans la chambre de combustion (3), chaque buse (2A, 2B, 2C) possédant une ouverture de sortie de buse (210) et un canal à carburant (220) servant au transport du carburant en direction de l'ouverture de sortie de buse (210), au moins deux types différents de buses (2A, 2B, 2C) étant présents,
- les buses (2A, 2B, 2C) possédant des types différents d'ouvertures de sortie de buse (210) ayant des sections transversales identiques, et
- en vue de prédéfinir différents débits volumiques de carburant à travers les canaux à carburant des différents types de buses (2A, 2B, 2C), une section transversale d'un canal à carburant (220) d'un type de buse (2A, 2B, 2C) étant différente d'une section transversale d'un canal à carburant (220) d'un autre type de buse (2B, 2C, 2A), **caractérisé en ce que**
- une commande de débit (5) est associée à au moins un type de buse (2B) et montée en amont du canal à carburant (220), au moyen de laquelle la quantité de carburant pouvant être acheminée au canal à carburant (220) est réglable, la commande de débit étant associée au type de buse (2B) dont le canal à carburant (220) présente la section transversale la plus grande.

2. Sous-ensemble de buses selon la revendication 1, **caractérisé en ce qu'**un canal à carburant (220) d'au moins un type de buse (2A, 2B, 2C) comporte au moins deux portions (220a, 220b) ayant des sections transversales différentes et la plus petite section transversale d'un canal à carburant (220) de ce type de buse (2A, 2B, 2C) est différente de la plus petite section transversale d'un canal à carburant (220) d'un autre type de buse (2B, 2C, 2A).

3. Sous-ensemble de buses selon la revendication 1 ou 2, **caractérisé en ce que** rapportée à une section transversale de référence, une section transversale d'un canal à carburant (220) d'un type de buse (2A) est au moins 3 % plus petite que la section transversale de référence, alors qu'une section transversale d'un canal à carburant (220) de l'autre type de buse (2B) est au moins 7 % plus grande que la section transversale du canal à carburant (220) dudit type de buse (2A).

4. Sous-ensemble de buses selon l'une des revendications 1 à 3, **caractérisé en ce que** rapportée à une section transversale de référence, une section transversale d'un canal à carburant (220) d'un type de buse (2A) est au maximum 5 % plus petite que la section transversale de référence, alors qu'une section transversale d'un canal à carburant (220) de l'autre type de buse (2B) est au maximum 10 % plus grande que la section transversale du canal à carburant (220) dudit type de buse (2A).

5. Sous-ensemble de buses selon la revendication 3 ou 4, **caractérisé en ce que** la section transversale de référence est comprise dans la plage de 0,75 mm² à 20 mm².

6. Sous-ensemble de buses selon la revendication 5, **caractérisé en ce que** la section transversale de référence est comprise dans la plage de 2,5 mm² à 3,9 mm².

7. Sous-ensemble de buses selon l'une des revendications précédentes, **caractérisé en ce qu'**une section transversale d'un type de buse (2A) présente un diamètre moyen (D_{A}) dans la plage de 1,85 mm à 1,95 mm et une section transversale d'un autre type de buse (2B) présente un diamètre moyen (D_{B}) dans la plage de 2,05 mm à 2,15 mm.

8. Sous-ensemble de buses selon l'une des revendications précédentes, **caractérisé en ce qu'**au moins trois types différents de buses (2A, 2B, 2C) sont présents, lesquels sont respectivement différents les uns des autres du point de vue de la section transversale d'un canal à carburant (220) respectif, de sorte qu'au moins trois débits volumiques de carburant sont prédéfinis à travers les canaux à carburant des buses (2A, 2B, 2C) des au moins trois types différents.

9. Sous-ensemble de buses selon l'une des revendications précédentes, **caractérisé en ce que** les buses (2A, 2B, 2C) des différents types sont disposées les unes à côté des autres le long d'une ligne circulaire.

10. Sous-ensemble de buses selon l'une des revendications précédentes, **caractérisé en ce que** les ouvertures de sortie de buse (210) des buses (2A, 2B, 2C) des différents types sont disposées de manière équidistante les unes à côté des autres.

11. Sous-ensemble de buses selon l'une des revendications précédentes, **caractérisé en ce que** les ouvertures de sortie de buse (210) des buses (2A, 2B, 2C) des différents types sont disposées les unes à côté des autres distribuées de manière inégale.

12. Sous-ensemble de buses selon l'une des revendications précédentes, **caractérisé en ce que** les ouvertures de sortie de buse (210) **des** buses (2A, 2B, 2C) des différents types sont disposées en alternance les unes par rapport aux autres.

13. Sous-ensemble de buses selon l'une des revendications précédentes, **caractérisé en ce que** la commande de débit comporte un dispositif à vanne (7) passif commandable en fonction de la pression et/ou un dispositif à vanne (7) actif commandable électriquement.
